# EUROPÄISCHE PATENTSCHRIFT

(11) **EP 0 763 572 B1**
(45) Veröffentlichungstag und Bekanntmachung des Hinweises auf die Patenterteilung: **10.04.2002**
(21) Anmeldenummer: 96810600.5
(22) Anmeldetag: 10.09.1996
(51) Int. Cl.: C09B 67/22, C09B 67/48, C08K 5/3415, C09B 57/00

(54) **Feste Lösungen von 1,4-Diketopyrrolopyrrolen**
Solid solutions of 1,4-diketopyrrolopyrroles
Solutions solides de 1,4-dicétopyrrolopyrroles

(30) Priorität: 18.09.1995 CH 263095
(43) Veröffentlichungstag der Anmeldung: 19.03.1997
(73) Patentinhaber: Ciba Specialty Chemicals Holding Inc., 4057 Basel (CH)
(72) Erfinder: Hao, Zhimin, 1723 Marly (CH); Wallquist, Olof, 1723 Marly (CH)

(56) Entgegenhaltungen:
- EP-A- 0 094 911
- EP-A- 0 181 290
- EP-A- 0 256 983
- EP-A- 0 654 506
- EP-A- 0 704 497
- EP-A- 0 707 049
- EP-A- 0 737 723

## Beschreibung

Die vorliegende Erfindung betrifft neue, einphasige feste Lösungen aus 3,6-Bis-(biphenyl-4-yl)-2,5-dihydro-pyrrolo[3,4-c]pyrrol-1,4-dion und einem Chinacridon, sowie ihre Herstellung und ihre Verwendung als Pigmente.

Aus den US-Patenten 4 783 540 und 4 810 304 ist bekannt, dass beim Mischen zweier verschiedener 1,4-Diketopyrrolopyrrole bzw. einem 1,4-Diketopyrrolopyrrol mit einem Chinacridon und nachfolgender Behandlung, z.B. durch Kneten, Mahlen oder Umfällen, feste Lösungen erhalten werden können. Die festen Lösungen sind durch ihre Röntgenbeugungsdiagramme charakterisiert, wobei sich die Röntgenbeugungsdiagramme der festen Lösungen von der Summe der Röntgenbeugungsdiagramme der Einzelkomponenten unterscheiden. Es ist allerdings festgestellt worden, dass es sich bei den dort beschriebenen Produkten um mehrphasige feste Lösungen handelt, d.h. die entsprechenden Röntgenbeugungsdiagramme weisen ausser den neuen Linien der festen Lösung auch noch Linien der einen und/oder der anderen Einzelkomponente auf.

Aus EP-A-654 506 ist ein Verfahren zur Herstellung fester Lösungen von verschiedenen Pigmenten durch Derivatisierung dieser Pigmente mit Carbamatgruppen bekannt.

Es ist nun gefunden worden, dass in Anwesenheit von 3,6-Bis-(biphenyl-4-yl)-2,5-dihydro-pyrrolo[3,4-c]pyrrol-1,4-dion (bisher in der Patentliteratur als 1,4-Diketo-3,6-bis-(biphenyl-4-yl)-pyrrolo[3,4-c]pyrrol bezeichnet) sich überraschenderweise Chinacridone in dessen Kristallgitter (Wirtsgitter) als Gast unter Bildung einer einphasigen festen Lösung einlagern. Die erhaltene feste Lösung besitzt demnach dasselbe Kristallgitter wie dasjenige des 3,6-Bis-(biphenyl-4-yl)-2,5-dihydro-pyrrolo[3,4-c]pyrrol-1,4-dion und die entsprechenden Röntgenbeugungsdiagramme sind praktisch identisch.

Durch die Bildung solcher festen Lösungen können sehr interessante und vorteilhafte Nuancenverschiebungen erzielt werden, ohne die guten Pigmenteigenschaften des bereits bewährten 3,6-Bis-(biphenyl-4-yl)-2,5-dihydro-pyrrolo[3,4-c]pyrrol-1,4-dions zu beeinträchtigen.

Die vorliegende Erfindung betrifft demnach feste Lösungen bestehend aus einem Pyrrolopyrrol der Formel 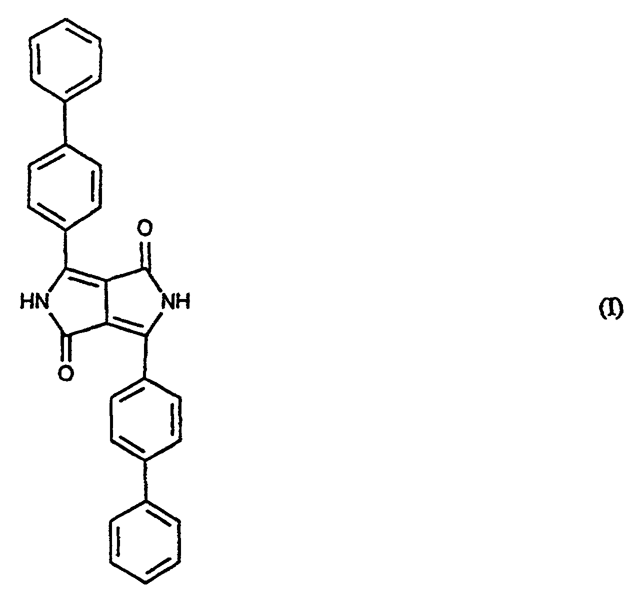 und
einem Chinacridon der Formel 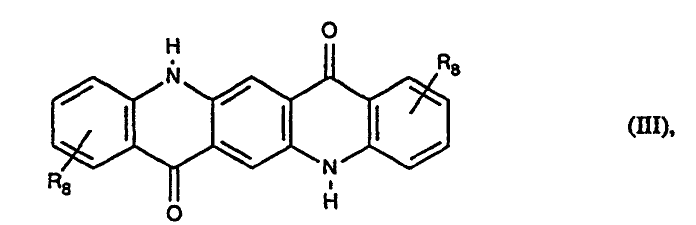 worin R₈ Wasserstoff, Halogen, C₁-C₆-Alkyl oder C₁-C₆-Alkoxy ist
im Mischverhältnis I:III von 20-90 Gew.%:80-10 Gew.%.

Bedeuten etwaige Substituenten Halogen, dann handelt es sich z.B. um Jod, Fluor, insbesondere Brom und bevorzugt Chlor;
bei C₁-C₆-Alkyl handelt es sich beispielsweise um Methyl, Ethyl, n-Propyl, Isopropyl, n-Butyl, sec.-Butyl, tert.-Butyl, n-Amyl, tert.-Amyl, Hexyl und bei C₁-C₁₈-Alkyl zusätzlich z.B. um Heptyl, Octyl, 2-Ethylhexyl, Nonyl, Decyl, Dodecyl, Tetradecyl, Hexadecyl oder Octadecyl;
C₁-C₁₈-Alkoxy bedeutet, auch in C₁-C₁₈-Alkoxycarbonyl, wie für C₁-C₆-Alkoxy z.B. Methoxy, Ethoxy, n-Propoxy, Isopropoxy, Butyloxy, Hexyloxy und zusätzlich Decyloxy, Dodecyloxy, Hexadecyloxy oder Octadecyloxy;
C₁-C₁₈-Alkylmercapto steht beispielsweise für Methylmercapto, Ethylmercapto, Propylmercapto, Butylmercapto, Octylmercapto, Decylmercapto, Hexadecylmercapto oder Octadecylmercapto;
C₁-C₁₈-Alkylamino bedeutet, auch in C₁-C₁₈-Alkylaminocarbonyl, z.B. Methylamino, Ethylamino, Propylamino, Hexylamino, Decylamino, Hexadecylamino oder Octadecylamino.

C₅-C₆-Cycloalkyl steht z.B. für Cyclopentyl und insbesondere für Cyclohexyl. Bevorzugte Chinacridone der Formel III sind solche, worin R₈ Wasserstoff, Methyl oder insbesondere Chlor ist.

Die erfindungsgemässen festen Lösungen können ausgehend von physikalischen Mischungen der oben definierten Komponenten der Formeln I und III nach folgenden an und für sich bekannten Verfahren hergestellt werden:
- durch Kontaktierung in polaren organischen Lösungsmitteln, bevorzugt durch Verrühren der Komponentenmischung bei Rückflusstemperatur,
- durch alkalische Umfällung der Komponentenmischung in polaren organischen Lösungsmitteln oder durch Verrühren der Komponentenmischung in polaren organischen Lösungsmitteln in Gegenwart von Alkalialkoholaten, Alkalihydroxiden oder quaternären Ammoniumverbindungen oder
- durch saure Umfällung, d.h. Auflösung der Komponentenmischung in Säure und Fällung der festen Lösung durch Verdünnen mit Wasser,
- durch intensive Mahlung oder Knetung der Komponentenmischung, gegebenenfalls mit anschliessender Rekristallisation in Wasser und/oder organischen Lösungsmitteln,
wobei wie z.B. in US-Patent 4 783 540 detailliert beschrieben vorgegangen werden kann.

Eine weitere neue Herstellungsmethode besteht darin, dass die Verbindungen der Formeln I und III nach an sich bekannten Methoden mit einem Dicarbonat der Formel

D-O-D (IV)

oder mit einem Trihaloessigsäureester der Formel

(R₉)₃C-D (V),

oder mit einem Azid der Formel

DN₃ (VI),

oder mit einem Carbonat der Formel

D-OR₁₀ (VII),

oder mit einem Alkylideniminooxyameisensäureester der Formel 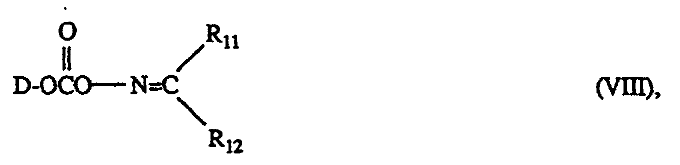 worin D eine Gruppe der Formel 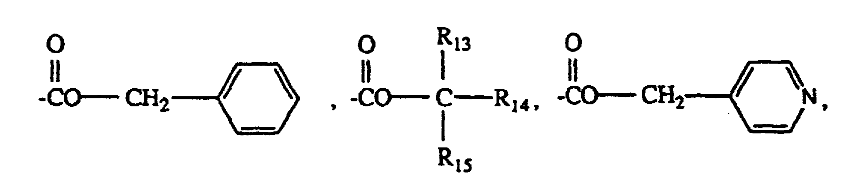 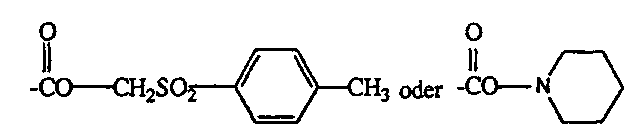 bedeutet,
R₉ Chlor, Fluor oder Brom, R₁₀ C₁-C₄-Alkyl oder unsubstituiertes oder durch Halogen, C₁-C₄-Alkyl, C₁-C₄-Alkoxy oder -CN substituiertes Phenyl, R₁₁ -CN oder -COOR₁₀ und R₁₂ unsubstituiertes oder durch Halogen, C₁-C₄-Alkyl, C₁-C₄-Alkoxy oder -CN substituiertes Phenyl sind und R₁₃, R₁₄ und R₁₅ unabhängig voneinander Wasserstoff, C₁-C₆-Alkyl oder C₂-C₅-Alkenyl bedeuten, wobei mindestens zwei von R₁₃, R₁₄ und R₁₅ Alkyl oder Alkenyl sein müssen, im Molverhältnis 1:2 in einem aprotischen organischen Lösungsmittel in Gegenwart einer Base als Katalysator, zu löslichen Verbindungen der Formeln 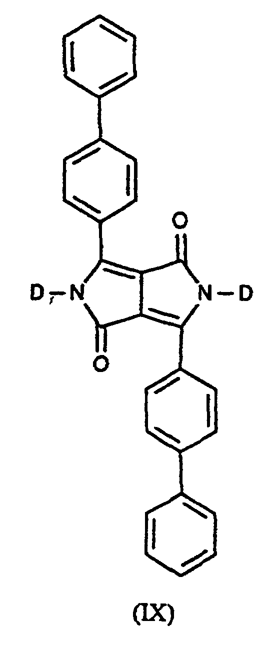 oder 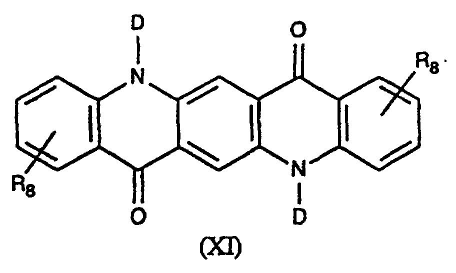 umgesetzt werden,
- die Verbindungen IX und XI entweder
   i) nach allgemein bekannten Methoden in Pulverform im Molverhältnis 1:1 homogen vermischt werden oder
   ii) nach allgemein bekannten Methoden in Pulverform im Molverhältnis 1:1 homogen vermischt werden und das Gemisch in einem Lösungsmittel gelöst wird oder
   iii) zuerst gelöst werden und in Lösung im Mischverhältnis 1:1 vermischt werden
   und danach
- aus dem trockenen oder gelösten Gemisch durch thermische, photolytische oder chemische Behandlung die gewünschten Mischkristalle ausgefällt werden.

R₁₃, R₁₄ und R₁₅ bedeuten als C₂-C₅Alkenyl z.B. Vinyl, Allyl, Methallyl, n-But-2-enyl, 2-Methyl-prop-2-enyl oder n-Pent-2-enyl.

Bevorzugt sind R₁₃ und R₁₅ Methyl und R₁₄ C₁-C₆-Alkyl und insbesondere Methyl.

Bevorzugt werden die Verbindungen der Formeln I und III mit einem Dicarbonat der Formel IV umgesetzt.

Die Dicarbonate der Formel IV, Trihaloessigsäureester der Formel V, Azide der Formel VI, Carbonate der Formel VII und Alkylideniminooxyameisensäureester der Formel VIII sind bekannte Substanzen. Sollten einige noch neu sein, so können sie in Analogie zu allgemein bekannten Methoden hergestellt werden.

Geeignete aprotische organische Lösungsmittel sind beispielsweise Ether, wie Tetrahydrofuran oder Dioxan, oder Glykoläther, wie Ethylenglykol-methyläther, Ethylenglykolethylether, Diethylenglykol-monomethylether oder Diethylenglykol-monoethylether, ferner dipolar-aprotische Lösungsmittel, wie Acetonitril, Benzonitril, N,N-Dimethylformamid, N,N-Dimethylacetamid, Nitrobenzol, N-Methylpyrrolidon, halogenierte aliphatische oder aromatische Kohlenwasserstoffe, wie Trichlorethan, Benzol oder durch Alkyl, Alkoxy oder Halogen substituiertes Benzol, wie Toluol, Xylol, Anisol oder Chlorbenzol oder aromatische N-Heterocyclen, wie Pyridin, Picolin oder Chinolin. Bevorzugte Lösungsmittel sind z.B. Tetrahydrofuran, N,N-Dimethylformamid, N-Methylpyrrolidon. Die genannten Lösungsmittel können auch als Mischungen eingesetzt werden. Zweckmässigerweise verwendet man 5-20 Gew.-Teile Lösungsmittel auf 1 Gew.-Teil der Reaktionsteilnehmer.

Als Katalysator geeignete Basen sind beispielsweise die Alkalimetalle selbst, wie Lithium, Natrium oder Kalium sowie deren Hydroxide und Carbonate, oder Alkaliamide, wie Lithium-, Natrium- oder Kaliumamid oder Alkalihydride, wie Lithium-, Natriumoder Kaliumhydrid, oder Erdalkali- oder Alkalialkoholate, die sich insbesondere von primären, sekundären oder tertiären aliphatischen Alkoholen mit 1 bis 10 C-Atomen ableiten, wie z.B. Lithium-, Natrium- oder Kaliummethylat, -ethylat, -n-propylat, -isopropylat, -n-butylat, -sek.-butylat, -tert.-butylat, -2-methyl-2-butylat, -2-methyl-2-pentylat, -3-methyl-3-pentylat, -3-ethyl-3-pentylat, und ferner organische aliphatische, aromatische oder heterocyclische N-Basen, darunter z.B. Diazabicyclooctan, Diazabicycloundecen und 4-Dimethylaminopyridin und Trialkylamine, wie z.B. Trimethyl- oder Triethylamin. Man kann aber auch ein Gemisch der genannten Basen verwenden.

Bevorzugt werden die organischen N-Basen, wie z.B. Diazabicyclooctan, Diazabicycloundecen und insbesondere 4-Dimethylaminopyridin.

Die Umsetzung wird zweckmässig bei Temperaturen zwischen 10 und 100°C, insbesondere zwischen 18 und 40°C, d.h. vorzugsweise bei Zimmertemperatur, durchgeführt und zwar bei atmosphärischem Druck.

Die Verbindungen der Formel I oder III werden entweder nach allgemein bekannten Methoden in Pulverform im gewünschten Verhältnis vermischt und das Gemisch im Lösungsmittel gelöst oder sie werden zuerst gelöst und die Lösungen im gewünschten Verhältnis vermischt.

Es können zweckmässig folgende Lösungsmittel eingesetzt werden: Ether, wie Tetrahydrofuran oder Dioxan, oder Glykoläther, wie Ethylenglykol-methyläther, Ethylenglykol-ethylether, Diethylenglykol-monomethylether oder Diethylenglykol-monoethylether, Polyalkohole, wie Polyethylenglykol, Ketone, wie Aceton, Ethylmethylketon, Isobutylmethylketon oder Cyclohexanon, ferner dipolar-aprotische Lösungsmittel, wie Acetonitril, Benzonitril, N,N-Dimethylformamid, N,N-Dimethylacetamid, Nitrobenzol, N-Methylpyrrolidon, Dimethylsulfoxyd, halogenierte aliphatische oder aromatische Kohlenwasserstoffe, wie Trichlorethan, Dichlormethan, Chloroform, Benzol oder durch Alkyl, Alkoxy oder Halogen substituiertes Benzol, wie Toluol, Xylol, Anisol oder Chlorbenzol, aromatische N-Heterocyclen, wie Pyridin, Picolin oder Chinolin oder hochsiedende Lösungsmittel, wie Decalin, n-Dodecan oder Kerosin oder Gemische derselben. Bevorzugte Lösungsmittel sind z.B. Toluol, Diphenylether, N-Methylpyrrolidon, N,N-Dimethylformamid, Dimethylsulfoxyd und Chinolin.

Die Konzentration der Verbindungen der Formel I und III im Lösungsmittel oder Lösungsmittelsystem kann je nach Lösungsmittel stark variieren. Zweckmässig setzt man 0,1 bis 20 Gew.% Verbindung der Formel I und III bezogen auf die gesamte Lösung und vorzugsweise 0,2 bis 5 Gew.% ein.

Aus dem trockenen oder gelösten Gemisch können die festen Lösungen bestehend aus den Verbindungen der Formeln I und III auf einfachste Weise erhalten werden, sei es durch a) thermische, d.h. z.B. durch Aufheizen auf Temperaturen zwischen 50 und 400°C, bevorzugt zwischen 100 und 200°C oder Laserbestrahlung, b) photolytische, d.h. z.B. durch Belichtung mit Wellenlängen unter 375 nm, oder c) chemische, d.h. z.B. mit organischen oder anorganischen Säuren, wie beispielsweise Essig-, Toluolsulfon-, Trifluoressig-, Salz- oder Schwefelsäure, Behandlung des trockenen oder gelösten Gemisches und Isolierung des erhaltenen Produktes nach üblichen Methoden.

Das Mischverhältnis zwischen den die erfindungsgemässen festen Lösungen bildenden Komponenten ist bevorzugt 80-90 Gew.% Pyrrolopyrrol der Formel I zu 20-10 Gew.% Chinacridon der Formel III.

Ist eine Rekristallisation bzw. thermische Behandlung der erfindungsgemässen festen Lösungen nötig so geschieht sie nach für Pigmente üblichen Methoden. Im allgemeinen handelt es sich um eine thermische Nachbehandlung in Wasser oder in einem organischen Lösungsmittel, gegebenenfalls unter Druck. Vorzugsweise verwendet man organische Lösungsmittel, z.B. durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Alkohole, wie Isopropanol, Butanole oder Pentanole, Ether, wie Ethylenglykolmonomethyl- oder -monoethylether, Amide, wie Dimethylformamid oder N-Methylpyrrolidon, sowie Dimethylsulfoxid oder Sulfolan. Man kann die Nachbehandlung auch in Wasser, gegebenenfalls unter Druck, in Gegenwart von organischen Lösungsmitteln und/oder mit Zusatz von oberflächenaktiven Substanzen durchführen.

Die erfindungsgemässen festen Lösungen können als Pigmente zum Färben von hochmolekularem organischem Material verwendet werden.

Hochmolekulare organische Materialien, die mit den erfindungsgemässen festen Lösungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen festen Lösungen als Toner oder in Form von Präparaten einzusetzen.

Bezogen auf das zu pigmentierende hochmolekulare organische Material kann man die erfindungsgemässen festen Lösungen in einer Menge von 0,01 bis 30 Gew.%, vorzugsweise von 0,1 bis 10 Gew. %, einsetzen.

Die Pigmentierung der hochmolekularen organischen Substanzen mit den erfindungsgemässen festen Lösungen erfolgt beispielsweise derart, dass man solche feste Lösungen gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen festen Lösungen in die Polymeren eingearbeitet werden. Zwecks Erzielung verschiedener Farbtöne ist es ferner möglich, den hochmolekularen organischen Stoffen neben den erfindungsgemässen festen Lösungen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen festen Lösungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Besonders geeignet sind die erfindungsgemässen festen Lösungen zum Einfärben von Kunststoffen, insbesondere Polyvinylchlorid und Polyolefinen, und Lacken, insbesondere Automobillacken.

In Färbungen, beispielsweise von Polyvinylchlorid oder Polyolefinen, zeichnen sich sowohl die erfindungsgemässen festen Lösungen durch gute allgemeine Pigmenteigenschaften, wie gute Dispergierbarkeit, hohe Farbstärke und Reinheit, gute Migrations-, Hitze-, Licht- und Wetterbeständigkeit sowie gute Deckkraft aus.

Die nachfolgenden Beispiele erläutern die Erfindung.

| Netzebenenabstände | doppelte Glanzwinkel | relative Intensität |
|---|---|---|
| (d-Werte in Å) | (2Θ) | (%) |
| 22,1785 | 3,98 | 51 |
| 11,0008 | 8,03 | 10 |
| 7,3287 | 12,07 | 12 |
| 4,9809 | 17,79 | 100 |
| 4,7273 | 18,76 | 59 |
| 4,3773 | 20,27 | 11 |
| 3,6218 | 24,56 | 14 |
| 3,4124 | 26,09 | 29 |
| 3,3473 | 26,61 | 85 |
| 3,2073 | 27,79 | 39 |
| 3,1654 | 28,17 | 17 |
| 3,0553 | 29,21 | 17 |

gekennzeichnet. Der Vergleich zeigt, dass die beiden Röntgenbeugungsdiagramme praktisch übereinstimmen.

Beispiel 1: (Stand der Technik) Eine Mischung von 0,80 g (2,24 mMol) 3,6-Bis-(4-chlorphenyl)-2,5-dihydropyrrolo[3,4-c]pyrrol-1,4-dion, 2,24 g (5,08 mMol) 3,6-Bis-(4-biphenylyl)-2,5-dihydropyrrolo[3,4-c]pyrrol-1,4-dion und 0,93 g (16,58 mMol) Kaliumhydroxid wird in 65 ml Dimethylsulfoxid unter Rühren auf 50°C erhitzt und bei dieser Temperatur 2 Stunden gerührt. Die erhaltene violette Lösung wird in eine Mischung von 150 ml Wasser, 60 ml Methanol und 0,91 ml (16,63 mMol) konz. Schwefelsäure bei 20°C geschüttet und dann bei Raumtemperatur 6 Stunden gerührt. Das ausgefallene Pigment wird abfiltriert, zuerst mit Methanol, dann mit Wasser gewaschen und im Vakuum bei 60°C getrocknet Man erhält 2,64 g (87 % d.Th.) eines roten Pulvers.

| Analyse | C | H | N | Cl |
|---|---|---|---|---|
| Ber.: | 76,31 % | 4,12 % | 6,74% | 5,12 % |
| Gef.: | 74,79 % | 4,29 % | 6,57 % | 5,22 % |

Die vollständigen Röntgenbeugungsdiagramme werden nach üblichen Methoden mit Hilfe eines SIEMENS D 500® Röntgen-Diffractometers (CuK_{α}-Strahlung) bestimmt.

Das Röntgenbeugungsdiagramm ist durch folgende Beugungslinien

| Netzebenenabstände | doppelte Glanzwinkel | relative Intensität |
|---|---|---|
| (d-Werte in Å) | (2Θ) | (%) |
| 22,1548 | 3,99 | 100 |
| 10,9616 | 8,06 | 16 |
| 7,3090 | 12,10 | 24 |
| 4,9515 | 17,90 | 75 |
| 4,7245 | 18,77 | 58 |
| 4,3778 | 20,27 | 25 |
| 3,6162 | 24,60 | 26 |
| 3,3633 | 26,48 | 54 |
| 3,3416 | 26,66 | 62 |
| 3,1908 | 27,94 | 41 |
| 3,1602 | 28,22 | 38 |

gekennzeichnet.

Beispiel 2: Ersetzt man bei gleicher Arbeitsweise, wie in Beispiel 1 beschrieben, die entsprechenden Pigmente mit 2,9-Dichlorchinacridon (1,54 mMol) und 3,6-Bis-(4-biphenylyl)-2,5-dihydro-pyrrolo[3,4-c]pyrrol-1,4-dion (6,02 mMol) um, so erhält man 2,98 g (92 % d.Th.) eines roten Pulvers.

| Analyse | C | H | N | Cl |
|---|---|---|---|---|
| Ber.: | 78,46% | 4,23% | 6,53% | 3,31% |
| Gef.: | 76,92 % | 4,31% | 6,35% | 3,32 % |

Das Röntgenbeugungsdiagramm ist durch folgende Beugungslinien

| Netzebenenabstände | doppelte Glanzwinkel | relative Intensität |
|---|---|---|
| (d-Werte in Å) | (2Θ) | (%) |
| 23,1808 | 3,81 | 100 |
| 11,0967 | 7,96 | 16 |
| 7,3487 | 12,03 | 24 |
| 5,0351 | 17,60 | 56 |
| 4,9901 | 17,76 | 62 |
| 4,7163 | 18,80 | 55 |
| 4,4141 | 20,10 | 27 |
| 3,3733 | 26,40 | 62 |
| 3,3579 | 26,52 | 63 |
| 3,2247 | 27,64 | 48 |
| 3,2065 | 27,80 | 43 |

gekennzeichnet.

### Beispiel 3: (Stand der Technik) Eine Mischung aus 2,14 g (6 mMol)

3,6-Bis-(4-Chlorphenyl)-2,5-dihydro-pyrrolo[3,4-c]pyrrol-1,4-dion, 10,57 g (24 mMol) 3,6-Bis-(4-biphenylyl)-2,5-dihydro-pyrrolo[3,4-c]pyrrol-1,4 -dion und 5,05 g Kaliumhydroxid in 200 ml tert.-Amylalkohol wird auf 100°C erhitzt und bei dieser Temperatur 1 Stunde gerührt. Danach wird das Reaktionsgemisch auf 80°C gekühlt, in eine auf 0°C gekühlte Lösung von 2,64 ml konz. Schwefelsäure, 300 ml Methanol und 300 ml Wasser eingetragen und 2 Stunden bei 0°C weitergerührt. Die rote Suspension wird abfiltriert und der Rückstand mit Methanol sowie Wasser gewaschen und im Vakuum bei 80°C getrocknet. Man erhält 11,85 g (93 % d.Th.) eines roten Pulvers.

| Analyse | C | H | N | Cl |
|---|---|---|---|---|
| Ber. | 77,55% | 4,22% | 6,66% | 3,97% |
| Gef. | 77,52% | 4,41% | 6,44% | 3,44% |

Das Röntgenbeugungsdiagramm ist durch folgende Beugungslinien gekennzeichnet:

| Netzebenenabstände (d-Werte in Å) | doppelte Glanzwinkel (2Θ) | relative Intensität (%) |
|---|---|---|
| 23,785 | 3,71 | 100 |
| 11,421 | 7,74 | 13 |
| 7,573 | 11,68 | 21 |
| 4,968 | 17,84 | 54 |
| 4,774 | 18,57 | 45 |
| 4,704 | 18,85 | 38 |
| 4,505 | 19,69 | 22 |
| 3,647 | 24,39 | 16 |
| 3,449 | 25,81 | 26 |
| 3,354 | 26,55 | 41 |
| 3,185 | 27,99 | 23 |

Beispiel 4: Ersetzt man bei gleicher Arbeitsweise, wie in Beispiel 3 beschrieben, die entsprechenden Pigmente jeweils mit 2,9-Dichlorchinacridon (6 mMol) und 3,6-Bis-(4-biphenylyl)-2,5-dihydro-pyrrolo[3,4-c]pyrrol-1,4 -dion (24 mMol) um, so erhält man 12,6 g (98 % d.Th.) eines roten Pulvers.

| Analyse | C | H | N | Cl |
|---|---|---|---|---|
| Ber. | 78,04% | 4,19% | 6,56% | 3,72% |
| Gef. | 76,32% | 4,13% | 6,24% | 3,40% |

Das Röntgenbeugungsdiagramm ist durch folgende Beugungslinien gekennzeichnet:

| Netzebenenabstände | doppelte Glanzwinkel | relative Intensität |
|---|---|---|
| (d-Werte in Å) | (2Θ) | (%) |
| 23,522 | 3,75 | 100 |
| 11,344 | 7,79 | 18 |
| 7,555 | 11,70 | 28 |
| 4,954 | 17,89 | 66 |
| 4,724 | 18,77 | 50 |
| 4,523 | 19,61 | 29 |
| 3,350 | 26,59 | 50 |
| 3,249 | 27,43 | 50 |
| 3,023 | 29,52 | 24 |

Beispiel 5: Eine Mischung aus 0,76 g (2 mMol) 2,9-Dichlorchinacridon, 3,52 g (8 mMol) 3,6-Bis-(4-biphenylyl)-2,5-dihydro-pyrrolo[3,4-c]pyrrol-1,4-dion und 120 ml Dowtherm® A* wird auf 250°C erhitzt und bei dieser Temperatur 4 Stunden gerührt. Danach wird das Reaktionsgemisch auf 80°C gekühlt. Die rote Suspension wird abfiltriert und der Rückstand mit Methanol, dann Wasser gewaschen und im Vakuum bei 80°C getrocknet. Man erhält 3,85 g (90 % d.Th.) eines roten Pulvers.

| Analyse | C | H | N | Cl |
|---|---|---|---|---|
| Ber. | 78,04% | 4,19% | 6,56% | 3,72% |
| Gef. | 77,68% | 4,07% | 6,40% | 3,42% |

* Dowtherm® A = Biphenyl-Diphenylether-Gemisch

Das Röntgenbeugungsdiagramm ist durch folgende Beugungslinien gekennzeichnet:

| Netzebenenabstände | doppelte Glanzwinkel | relative Intensität |
|---|---|---|
| (d-Werte in Å) | (2Θ) | (%) |
| 22,078 | 3,99 | 100 |
| 10,990 | 8,04 | 19 |
| 7,309 | 12,10 | 21 |
| 4,980 | 17,80 | 64 |
| 4,736 | 18,72 | 37 |
| 4,373 | 20,29 | 18 |
| 3,622 | 24,56 | 13 |
| 3,413 | 26,08 | 17 |
| 3,349 | 26,60 | 50 |
| 3,211 | 27,77 | 44 |
| 3,035 | 29,41 | 12 |

Beispiel 6: (Stand der Technik) Eine Mischung aus 1,09 g (3 mMol) 3-Phenyl-6-(4-biphenyl)-2,5-dihydropyrrolo[3,4-c]pyrrol-1,4-dion, 2,64 g (6 mMol) 3,6-Bis-(4-biphenylyl)-2,5-dihydropyrrolo[3,4-c]pyrrol-1,4-dion und 1,51g Kaliumhydroxid in 60 ml Dimethylsulfoxid wird auf 50°C aufgewärmt und bei dieser Temperatur 4,5 Stunden gerührt. Danach wird das Reaktionsgemisch in eine Lösung von 60 ml Methanol und 240 ml Wasser eingetragen und 4 Stunden bei Raumtemperatur gerührt. Die rote Suspension wird abfiltriert und der Rückstand mit Methanol, dann Wasser gewaschen und im Vakuum bei 60° getrocknet. Man erhält 3,4 g (91 % d.Th.) eines roten Pulvers.

| Analyse | C | H | N |
|---|---|---|---|
| Ber. | 80,90% | 4,53% | 6,80% |
| Gef. | 79,52% | 4,60% | 6,47% |

Das Röntgenbeugungsdiagramm ist durch folgende Beugungslinien gekennzeichnet:

| Netzebenenabstände | doppelte Glanzwinkel | relative Intensität |
|---|---|---|
| (d-Werte in Å) | (2Θ) | (%) |
| 23,595 | 3,74 | 100 |
| 11,513 | 7,67 | 13 |
| 7,450 | 11,87 | 20 |
| 5,015 | 17,67 | 49 |
| 4,759 | 18,63 | 51 |
| 4,505 | 19,69 | 29 |
| 3,638 | 24,45 | 17 |
| 3,347 | 26,61 | 57 |
| 3,221 | 27,67 | 29 |
| 3,055 | 29,21 | 15 |

Beispiel 7: Ersetzt man bei gleicher Arbeitsweise, wie in Beispiel 6 beschrieben, die entsprechenden Pigmente jeweils mit 2,9-Dimethylchinacridon (2 mMol) und 3,6-Bis-(4-biphenylyl)-2,5-dihydro-pyrrolo[3,4-c]pyrrol-1,4 -dion (8 mMol) um, so erhält man 3,8 g (91 % d.Th.) eines roten Pulvers.

| Analyse | C | H | N |
|---|---|---|---|
| Ber. | 80,97% | 4,61% | 6,74% |
| Gef. | 79,50% | 4,75% | 6,35% |

Das Röntgenbeugungsdiagramm ist durch folgende Beugungslinien gekennzeichnet:

| Netzebenenabstände | doppelte Glanzwinkel | relative Intensität |
|---|---|---|
| (d-Werte in Å) | (2Θ) | (%) |
| 23,202 | 3,80 | 100 |
| 11,115 | 7,95 | 15 |
| 7,475 | 11,83 | 28 |
| 4,993 | 17,75 | 59 |
| 4,734 | 18,73 | 59 |
| 3,673 | 24,21 | 23 |
| 3,347 | 26,62 | 67 |
| 3,154 | 28,27 | 30 |
| 3,049 | 29,27 | 24 |

Beispiel 8: Verfährt man analog wie in Beispiel 5 beschrieben, verwendet aber anstelle von 0,76 g 2,9-Dichlorchinacridon 0,68 g 2,9-Dimethylchinacridon, so erhält man 3,9 g (93 % d.Th.) eines roten Pulvers.

| Analyse | C | H | N |
|---|---|---|---|
| Ber. | 80,97% | 4,61% | 6,74% |
| Gef. | 80,60% | 4,50% | 6,39% |

Das Röntgenbeugungsdiagramm ist durch folgende Beugungslinien gekennzeichnet:

| Netzebenenabstände | doppelte Glanzwinkel | relative Intensität |
|---|---|---|
| (d-Werte in Å) | (2Θ) | (%) |
| 22,392 | 3,94 | 100 |
| 11,064 | 7,98 | 18 |
| 7,344 | 12,04 | 20 |
| 4,993 | 17,75 | 71 |
| 4,758 | 18,63 | 42 |
| 4,387 | 20,22 | 17 |
| 3,629 | 24,51 | 14 |
| 3,418 | 26,05 | 20 |
| 3,355 | 26,55 | 51 |
| 3,215 | 27,72 | 27 |
| 3,165 | 28,17 | 16 |
| 3,048 | 29,28 | 15 |

Beispiel 9: Ersetzt man die im Beispiel 5 verwendeten 0,76 g 2,9-Dichlorchinacridon durch 0,62 g Chinacridon, so erhält man nach analoger Aufarbeitung gemäss Beispiel 8 ein rotes Pulver (3,8 g, 92 % d.Th.).

| Analyse | C | H | N |
|---|---|---|---|
| Ber. | 80,82% | 4,43% | 6,88% |
| Gef. | 80,82% | 4,34% | 6,53% |

Das Röntgenbeugungsdiagramm ist durch folgende Beugungslinien gekennzeichnet:

| Netzebenenabstände | doppelte Glanzwinkel | relative Intensität |
|---|---|---|
| (d-Werte in Å) | (2Θ) | (%) |
| 22,208 | 3,98 | 100 |
| 11,005 | 8,03 | 17 |
| 4,985 | 17,78 | 56 |
| 4,739 | 18,71 | 33 |
| 4,378 | 20,27 | 15 |
| 3,624 | 24,54 | 10 |
| 3,410 | 26,11 | 17 |
| 3,350 | 26,59 | 44 |
| 3,211 | 27,76 | 23 |
| 3,161 | 28,21 | 12 |
| 3,053 | 29,23 | 11 |

Beispiel 10: 1000 g Polypropylengranulat (® DAPLEN PT-55, Chemie LINZ) und 20 g eines 50 %-igen Pigmentpräparates, bestehend aus 10 g der festen Lösung von Beispiel 2 und 10 g Mg-Behenat, werden in einer Mischtrommel intensiv vermischt. Das so behandelte Granulat wird bei 260 bis 285°C nach dem Schmelzspinnverfahren versponnen. Man erhält rotgefärbte Fasern mit sehr guten Licht- und textilen Echtheiten.

## Patentansprüche

1. Feste Lösungen bestehend aus einem Pyrrolopyrrol der Formel 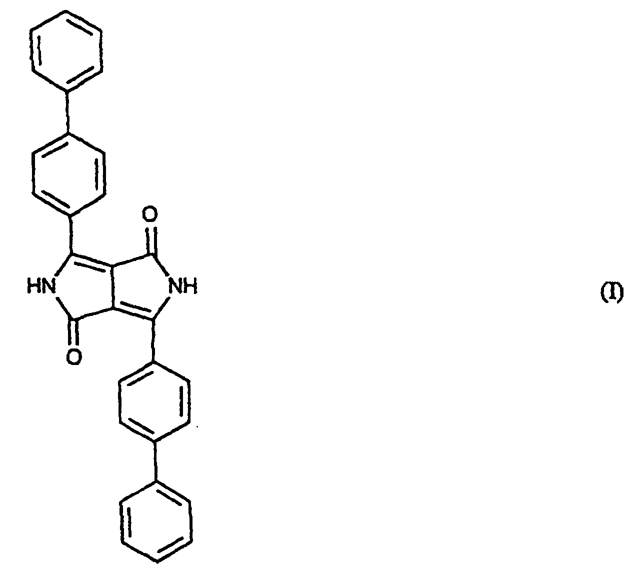 und
einem Chinacridon der Formel 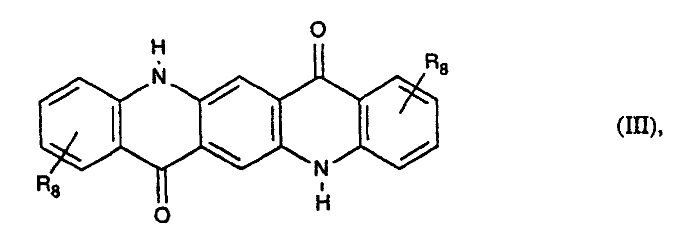 worin R₈ Wasserstoff, Halogen, C₁-C₆-Alkyl oder C₁-C₆-Alkoxy ist
im Mischverhältnis I:III von 20-90 Gew.%-80-10 Gew.%.

2. Feste Lösungen gemäss Anspruch 1, **dadurch gekennzeichnet, dass** sie ein Chinacridon der Formel III enthalten, worin R₈ Wasserstoff, Methyl oder Chlor ist.

3. Verfahren zur Herstellung von festen Lösungen gemäss Anspruch 1, **dadurch gekennzeichnet, dass** die Verbindungen der Formeln I und III nach an sich bekannten Methoden mit einem Dicarbonat der Formel
D-O-D (IV)
oder mit einem Trihaloessigsäureester der Formel
(R₉)₃C - D (V),
oder mit einem Azid der Formel
DN₃ (VI),
oder mit einem Carbonat der Formel
D-OR₁₀ (VII),
oder mit einem Alkylideniminooxyameisensäureester der Formel 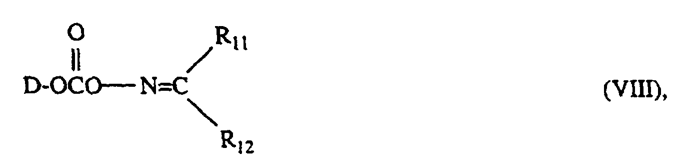 worin D eine Gruppe der Formel 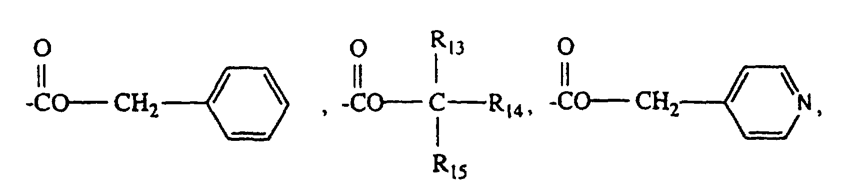 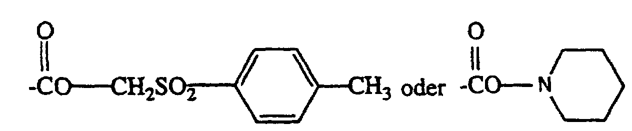 bedeutet,
R₉ Chlor, Fluor oder Brom, R₁₀ C₁-C₄-Alkyl oder unsubstituiertes oder durch Halogen, C₁-C₄-Alkyl, C₁-C₄-Alkoxy oder -CN substituiertes Phenyl, R₁₁ -CN oder -COOR₁₀ und R₁₂ unsubstituiertes oder durch Halogen, C₁-C₄-Alkyl, C₁-C₄-Alkoxy oder -CN substituiertes Phenyl sind und R₁₃, R₁₄ und R₁₅ unabhängig voneinander Wasserstoff, C₁-C₆-Alkyl oder C₂-C₅-Alkenyl bedeuten, wobei mindestens zwei von R₁₃, R₁₄ und R₁₅ Alkyl oder Alkenyl sein müssen, im Molverhältnis 1:2 in einem aprotischen organischen Lösungsmittel in Gegenwart einer Base als Katalysator, zu löslichen Verbindungen der Formeln 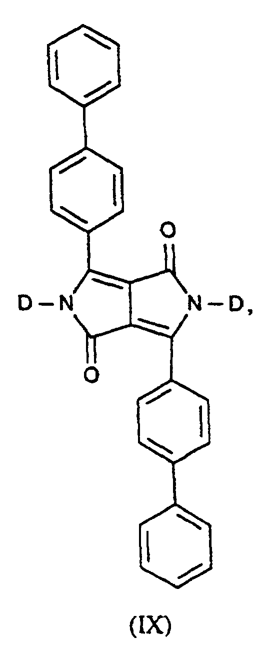 oder 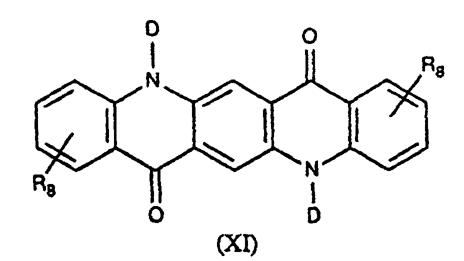 umgesetzt werden,
- die Verbindungen IX und XI entweder
i) nach allgemein bekannten Methoden in Pulverform im Molverhältnis 1:1 homogen vermischt werden oder
ii) nach allgemein bekannten Methoden in Pulverform im Molverhältnis 1:1 homogen vermischt werden und das Gemisch in einem Lösungsmittel gelöst wird oder
iii) zuerst gelöst werden und in Lösung im Mischverhältnis 1:1 vermischt werden
und danach
- aus dem trockenen oder gelösten Gemisch durch thermische, photolytische oder chemische Behandlung die gewünschten Mischkristalle ausgefällt werden.

4. Feste Lösungen gemäss Anspruch 1 bestehend aus einem Pyrrolopyrrol der Formel I und einem Chinacridon der Formel III im Mischverhältnis I:III von 80-90 Gew.%:20-10 Gew.%.

5. Hochmolekulares organisches Material enthaltend eine feste Lösung gemäss Anspruch 1.

6. Hochmolekulares organisches Material gemäss Anspruch 8, **dadurch gekennzeichnet, dass** es ein Kunststoff ist.

7. Hochmolekulares organisches Material gemäss Anspruch 8, **dadurch gekennzeichnet, dass** es ein Lack ist.

## Claims

1. A solid solution consisting of a pyrrolopyrrole of the formula 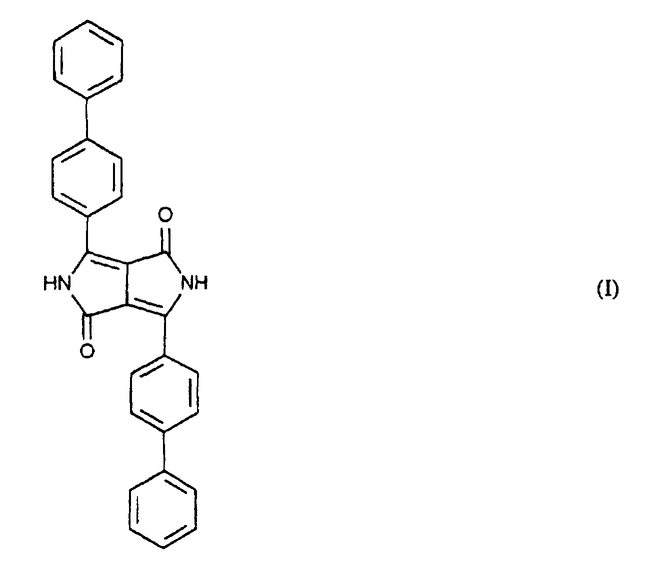 and
a quinacridone of the formula 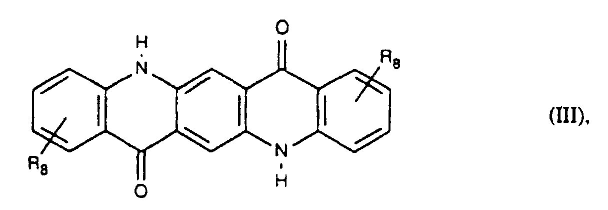 in which R₈ is hydrogen, halogen, C₁-C₆alkyl or C₁-C₆alkoxy,
in the mixing ratio I:III of 20-90% by weight:80-10% by weight.

2. A solid solution according to claim 1, which comprises a quinacridone of the formula III in which R₈ is hydrogen, methyl or chlorine.

3. A process for the preparation of a solid solution according to claim 1, which comprises reacting the compounds of the formulae I and III by methods known per se with a dicarbonate of the formula
D - O - D (IV)
or with a trihaloacetate of the formula
(R₉)₃C - D (V),
or with an azide of the formula
DN₃ (VI),
or with a carbonate of the formula
D-OR₁₀ (VII),
or with an alkylideneiminooxyformate of the formula 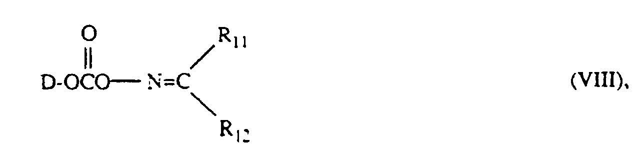 in which D is a group of the formula 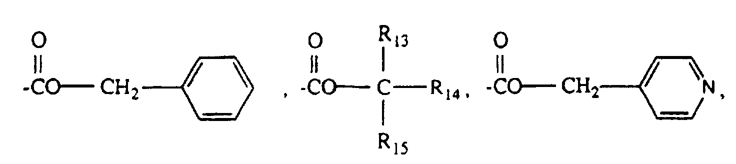 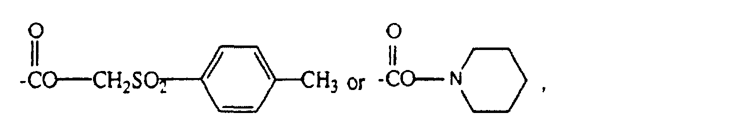 R₉ is chlorine, fluorine or bromine, R₁₀ is C₁-C₄alkyl or unsubstituted or halogen-, C₁-C₄alkyl-, C₁-C₄alkoxy- or -CN- substituted phenyl, R₁₁ is -CN or -COOR₁₀, and R₁₂ is unsubstituted or halogen-, C₁-C₄alkyl-, C₁-C₄-alkoxy- or -CN- substituted phenyl, and
R₁₃, R₁₄ and R₁₅ independently of one another are hydrogen, C₁-C₆alkyl or C₂-C₅alkenyl, where at least two of R₁₃, R₁₄ and
R₁₅ must be alkyl or alkenyl, in a molar ratio of 1:2 in an aprotic organic solvent in the presence of a base as catalyst, to give a soluble compound of the formula 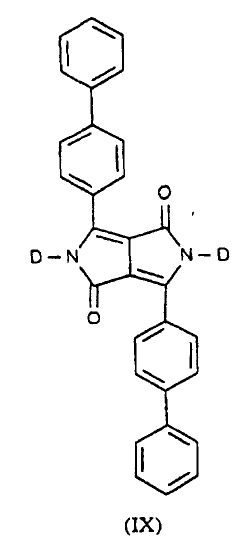 or 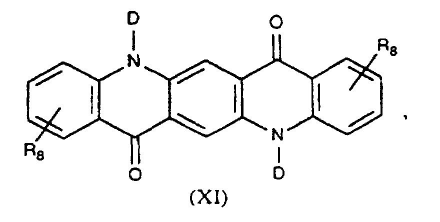
- subjecting the compounds IX and XI either
i) to homogeneous mixing by generally known methods in powder form in a molar ratio of 1:1, or
ii) to homogeneous mixing by generally known methods in powder form in a molar ratio of 1:1 followed by dissolution of the mixture in a solvent, or
iii) first of all to dissolution and then to mixing, in solution, in a ratio of 1:1,
and then
- precipitating the desired mixed crystals from the dry or dissolved mixture by thermal, photolytic or chemical treatment.

4. A solid solution according to claim 1, consisting of a pyrrolopyrrole of the formula I and a quinacridone of the formula III in a mixing ratio I:III of 80-90% by weight:20-10% by weight.

5. A high molecular mass organic material comprising a solid solution according to claim 1.

6. A high molecular mass organic material according to claim 5, which is a plastic.

7. A high molecular mass organic material according to claim 5, which is a surface coating.

## Revendications

1. Solutions solides constituées par un pyrrolopyrrole de formule 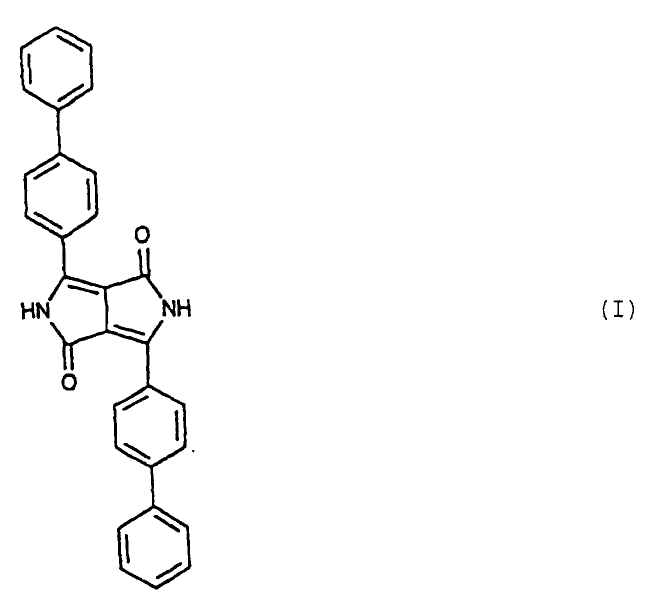 et
par une quinacridone de formule 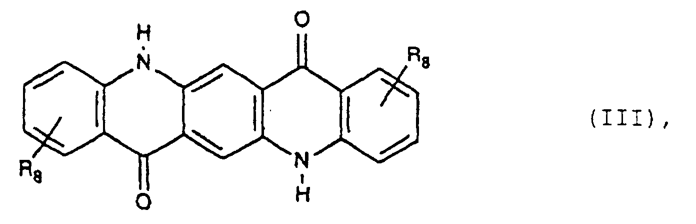 où R₈ représente un atome d'hydrogène, un atome d'halogène, des groupes alkyle en C₁-C₆ ou alkoxy en C₁-C₆,
dans un rapport d'ingrédients I:III de 20-90 % en masse:80-10 % en masse.

2. Solutions solides selon la revendication 1, **caractérisées en ce qu'**elles contiennent une quinacridone de formule III, où R₈ représente un atome d'hydrogène, un groupe méthyle ou chloro.

3. Procédé pour la préparation de solutions solides selon la revendication 1, **caractérisé en qu'**on fait réagir les composés de formules I et III selon des méthodes connues en soi sur un bicarbonate de formule
D-O-D (IV)
ou sur un ester de l'acide trifluoracétique de formule
(R₉)₃C-D (V),
ou sur un azoture de formule
DN₃ (VI),
ou sur un carbonate de formule
D-OR₁₀ (VII),
ou sur un ester de l'acide alkylidéniminooxyformique de formule 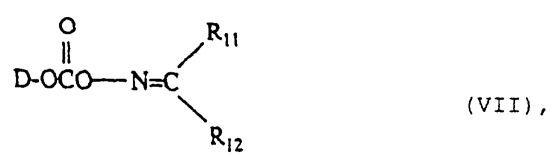 où D représente un groupe de formule 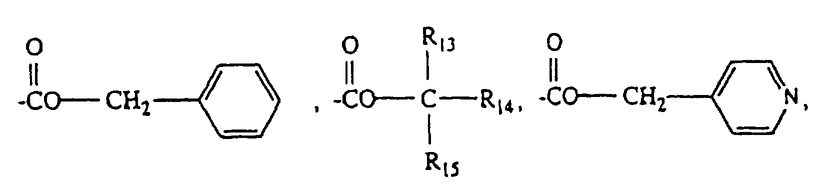 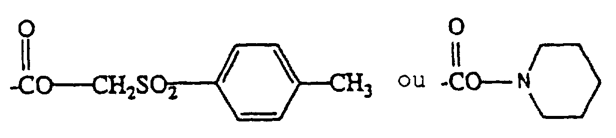 R₉ représente un atome de chlore, de fluor ou de brome, R₁₀ représente un groupe alkyle en C₁-C₄ ou un groupe phényle non substitué ou substitué par des substituants halogène, alkyle en C₁-C₄, alkoxy en C₁-C₄ ou -CN, R₁₁ représente des groupes -CN ou -COOR₁₀ et R₁₂ représente un groupe phényle non substitué ou substitué par des substituants halogène, alkyle en C₁-C₄, alkoxy en C₁-C₄ ou -CN, et R₁₃, R₁₄ et R₁₅ représentent, indépendamment les uns des autres, des atomes d'hydrogène, des groupes alkyle en C₁-C₆ ou alcényle en C₂-C₅, au moins deux des R₁₃, R₁₄ et R₁₅ doivent représenter un groupe alkyle ou alcényle, dans un rapport molaire 1:2 dans un solvant organique aprotique, en présence d'une base comme catalyseur, pour obtenir des composés solubles de formules 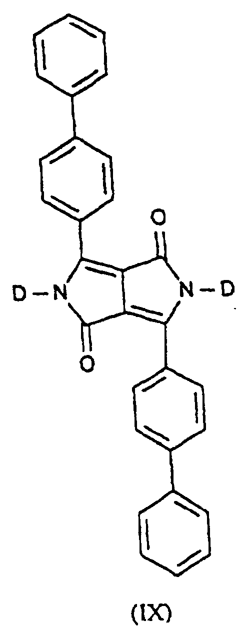 ou 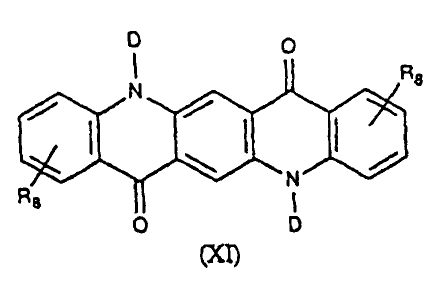 les composés IX et XI sont traités soit
i) par mélange sous forme pulvérulente dans un rapport molaire 1:1 pour obtenir un mélange homogène à l'aide de méthodes généralement connues, ou
ii) par mélange sous forme pulvérulente dans un rapport molaire 1:1 pour obtenir un mélange homogène à l'aide de méthodes généralement connues et par dissolution du mélange dans un solvant, soit
iii) d'abord par dissolution et ensuite par mélange en solution dans un rapport 1:1
et ensuite
- par précipitation à partir du mélange sec ou dissous par un traitement thermique, photolytique ou chimique en vue d'obtenir les cristaux mixtes voulus.

4. Solutions solides selon la revendication 1, constituées par un pyrrolopyrrole de formule I et une quinacridone de formule III dans un rapport d'ingrédients I:III de 80-90 % en masse:20-10 % en masse.

5. Matière organique de haut poids moléculaire contenant une solution solide selon la revendication 1.

6. Matière organique de haut poids moléculaire selon la revendication 5, **caractérisée en ce qu'**elle est une matière synthétique.

7. Matière organique de haut poids moléculaire selon la revendication 5, **caractérisée en ce qu'**elle est une laque.
